# EUROPEAN PATENT SPECIFICATION

(11) **EP 1 961 999 B1**
(45) Date of publication and mention of the grant of the patent: **30.11.2011**
(21) Application number: 08250567.8
(22) Date of filing: 19.02.2008
(51) Int. Cl.: F16H 61/04

(54) **Control device and control method of transmission**
Vorrichtung und Verfahren zur Steuerung eines Getriebes
Dispositif et procédé de commande de transmission

(30) Priority: 20.02.2007 JP 2007039381
(43) Date of publication of application: 27.08.2008
(73) Proprietor: Toyota Jidosha Kabushiki Kaisha, Aichi-ken, 471-8571 (JP)
(72) Inventor: Shimizu, Masato c/o Toyota Jidosha K.K., Toyota-shi, Aichi-ken 471-8571 (JP)
(74) Representative: Albutt, Anthony John

(56) References cited:
- EP-A1- 1 205 691
- EP-A2- 1 411 279
- JP-A- 2000 205 410
- US-A1- 2005 092 115

## Description

### BACKGROUND OF THE INVENTION

### 1. Field of the Invention

The invention relates to a control device and a control method of a transmission.

### 2. Description of the Related Art

There is a known transmission that automatically performs the shifting by using a synchromesh mechanism that synchronizes the rotations of gears and an actuator that controls the synchromesh mechanism. The synchromesh mechanism includes a sleeve and a synchronizer ring. The sleeve is connected to one of an input shaft and an output shaft of the transmission. When the sleeve is moved from a neutral position to a geared position by the actuator, the sleeve meshes with a gear that has been synchronized with the rotation of a shaft (one of the input shaft and the output shaft) other than the shaft (the other of the input shaft an the output shaft) to which the sleeve is connected. The synchronizer ring is formed so that the input shaft and the output shaft are synchronized by the friction force that increases according to the movement of the sleeve. Therefore, even if the input shaft and the output shaft are not synchronized before a gear shift, the synchronization can be achieved as the sleeve moves during the shift. Hence, the smooth shifting can be performed. If a vehicle equipped with a transmission that includes an above-described synchromesh mechanism receives a shock due to a sharp acceleration or deceleration, a run on a rough surface road, a run over bumps, for example, the sleeve may sometimes move from the geared position to a neutral position side and therefore the gear may jump out of the sleeve. If the gear has jumped out, power is not transmitted, thus resulting in a vehicle run state that the driver does not intend.

Technologies that solve this problem are disclosed, for example, in Japanese Utility Model Publication No. 2-21646, and Japanese Patent Application Publication No. 2000-205410 (JP-A-2000-205410).

An automatic transmission device disclosed in Japanese Utility Model Publication No. 2-21646 is equipped with a mechanically operated synchromesh mechanism, and has a control device that automatically performs the gear shift operation. This automatic transmission device includes gear jump-out detection means for detecting a gear jump-out, gear arrangement means for arranging gears, and means for sending to the gear arrangement means a command to arrange the gears into a neutral state and then arrange the gears into the previous gear state again based on a detection signal from the gear jump-out detection means.

According to the automatic transmission device disclosed in Japanese Examined Utility Model Publication No. 2-21646, if the gear becomes disengaged due to an external factor, the gear is completely brought to the neutral position to remove the gear mesh before the gear arranging operation is performed again. This restrains an event that the gears are arranged while the input shaft and the output shaft of the transmission are in a non-synchronous state. Therefore, the mechanically operated synchromesh mechanism can be reliably operated, and normal gear arrangement without abnormal gear noise can be carried out within a short time.

An automatically operated transmission device disclosed in JP-A-2000-205410 includes: an operation mechanism having a sleeve that is rotatable synchronously with a clutch hub provided on a driven shaft and is movable in an axis direction, and that is positioned at a neutral position during a neutral state, and a synchronizer ring that synchronizes an input shaft and an output shaft of the transmission while increasing the frictional force to a predetermined gear of the gear shift mechanism during the displacement from a shift-in region to a synchronization region according to the amount of movement of the sleeve in the axis direction, and that idles to allow the internal teeth of the sleeve to mesh with the external teeth of a predetermined gear and thus completes the gear shift when the sleeve moves from the synchronization region to a push-through region, and an actuator capable of being driven electrically or in a fluid pressure fashion which moves the sleeve in the axis direction. This automatically operated transmission device includes means for detecting the amount of movement of the sleeve or a movable member of the actuator based on the driving action of the actuator, and means for re-driving the actuator into the present shift state when the amount of movement detected at a time other than the time of a normal shift operation is a value that corresponds to the present shift state of the actuator, and for re-driving the actuator into the present shift state after returning the sleeve to the neutral position when the detected amount of movement is a value that corresponds to the synchronization region or the shift-in region.

According to the automatically operated transmission device disclosed in JP-A-2000-205410, when the movement amount of the sleeve is equal to a value that corresponds to the synchronization region or the shift-in region, which is when the sleeve and the predetermined gear are not in mesh, the sleeve is returned to the neutral position and then the actuator is re-driven to the present shift state. On the other hand, when the movement amount of the sleeve is a value that corresponds to the push-through region, which is when the sleeve and a predetermined gear are in mesh, the actuator is re-driven to the present shift state without returning the sleeve to the neutral position. Therefore, although a neutral state that a driver does not intend may occur, the duration of such a neutral state can be minimized.

However, in the automatic transmission device disclosed in Japanese Examined Utility Model Publication No. 2-21646, when a gear jumps out, the gear is always returned to a neutral position before the gear re-arranging operation is performed. Therefore, for example, even in the case where the input shaft and the output shaft of the transmission are synchronized, or in the case where the vehicle is at a stop and therefore it is not necessary to take the synchronization of the input shaft and the output shaft into consideration, the gear is returned to the neutral position, so that the re-arrangement time becomes unnecessarily long. Furthermore, in the automatically operated transmission device disclosed in the JP-A-2000-205410, the switching between the operation of re-arranging the gears after returning the sleeve to the neutral position and the operation of re-arranging the sleeve without returning it to the neutral position is performed according to the amount of movement of the sleeve. However, in the case where the gear and the sleeve are in a not-meshed state (i.e., a gear jumped-out state), the sleeve is always returned to the neutral position before being re-arranged. Therefore, the re-arrangement time becomes unnecessarily long, as in Japanese Examined Utility Model Publication No. 2-21646.

EP 1205691 which shows all the features of the preambles according to claims 1 and 9, discloses a shift control device for a transmission, comprising a transmission with a synchronizing device, a select actuator for actuating the speed change operation mechanism of the transmission in the selecting direction, a shift actuator for actuating the speed change operation mechanism in the shifting direction, and a controller. The driving force of the shift actuator in a synchronizing range during the gear-engaging operation is determined based on a difference synchronizing rotational speed.

EP 1411279 discloses a method of controlling the positioning of the synchronizers of a dual clutch transmission having a plurality of synchronizers to selectively engage and disengage various gears sets, and a plurality of shift actuators adapted to move the synchronizers.

### SUMMERY OF THE INVENTION

The invention provides a control device and a control method of a transmission that restrain occurrence of abnormal gear noise and also restrain unnecessary prolongation of the gear re-arrangement time when the gear is engaged again from a gear jumped-out state.

A transmission control device in accordance with a first aspect of the invention automatically controls a transmission by using a synchromesh mechanism and an actuator that controls the synchromesh mechanism. The synchromesh mechanism has a sleeve that is connected to one of an input shaft and an output shaft of the transmission. A gear is rotated in synchronous with the other of the input shaft and the output shaft. The sleeve moves from a neutral position to a geared position and meshes with the gear in synchronization. The transmission control device in accordance with the first aspect includes: movement amount detection means for detecting a movement amount of the sleeve; determination means for determining whether the sleeve is jumped out of the gear based on the movement amount of the sleeve; and actuator control means for controlling the actuator based on at least a synchronous state of the input shaft and the output shaft if it is determined that the sleeve is jumped out of the gear.

The actuator control means is configured to, if it is determined that the sleeve is jumped out of the gear, select one of a first control mode of the actuator that moves the sleeve to the geared position after once returning the sleeve to the neutral position and a second control mode that moves the sleeve to the geared position without returning the sleeve to the neutral position, and to control the actuator according to the selected control mode.

The determination means may determine that the sleeve is jumped out of the gear if the movement amount of the sleeve reaches a first predetermined value.

The actuator control means may select the control mode of the actuator based on a rotation speed of the input shaft and a rotation speed of the output shaft.

The actuator control means may select the second control mode if the rotation speed of the input shaft and the rotation speed of the output shaft are synchronous.

The actuator control means may select the first control mode if the rotation speed of the input shaft and the rotation speed of the output shaft are not synchronous.

The actuator control means may select the second control mode if a vehicle equipped with the transmission is in a stopped state.

The transmission control device may further include actuator drive preparation means for preparing to move the sleeve to the geared position by using the actuator when the movement amount of the sleeve reaches a second predetermined value that is between a first predetermined value and the geared position.

The actuator may be hydraulically controlled, and a line oil pressure of the actuator may be heightened when the movement amount of the sleeve reaches the second predetermined value.

A transmission control method in accordance with a second aspect of the invention includes: detecting a movement amount of the sleeve; determining whether the sleeve is jumped out of the gear based on the movement amount of the sleeve; and controlling the actuator based on at least a synchronous state of the input shaft and the output shaft if it is determined that the sleeve is jumped out of the gear. The method further comprises the steps of: if it is determined that the sleeve (310) is Jumped out of the gear (330), selecting one of a first control mode of the actuator (500) that moves the Sleeve (310) to the geaved position (Sₘₐₓ) after once returning the sleeve (310) to the neutral position and a second control mode that moves the sleeve (310) to the geaved position (Sₘₐₓ) without returning the sleeve (310) to the neutral position, and controlling the actuator (500) according to the Selected control mode

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 is a diagram showing a structure of a transmission in accordance with an embodiment of the invention;
FIG. 2 is a diagram showing a structure of a synchromesh mechanism in accordance with an embodiment of the invention;
FIGS. 3A to 3D are diagrams showing actions of the synchromesh mechanism shown in FIG. 2;
FIG. 4 is a block diagram showing functions of a control device in accordance with an embodiment of the invention;
FIG. 5 is a flowchart showing a control process of an ECU in accordance with an embodiment of the invention;
FIG. 6 is a diagram showing a relationship among a neutral position, a geared position, an actuator drive preparation position, and a gear jump-out position of a sleeve; and
FIGS. 7 and 8 are timing charts regarding the amount of movement of the sleeve in accordance with an embodiment of the invention.

### DETAILED DESCRIPTION OF EMBODIMENTS

Hereinafter, embodiments of the invention will be described with reference to the drawings. In the following description, the component parts are assigned with the same reference characters. Those components are the same in name and function. Therefore, detailed descriptions thereof will not be repeated.

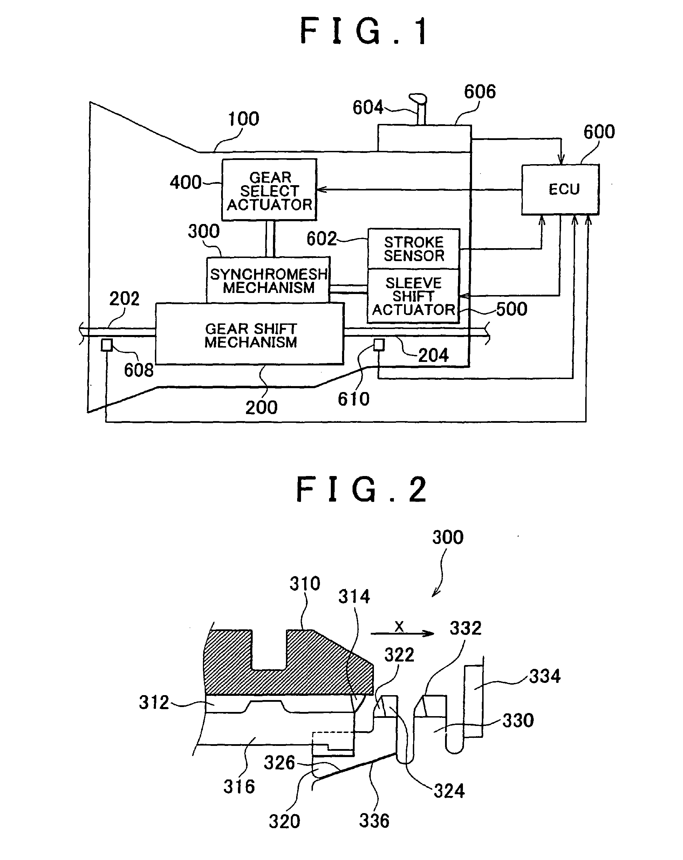

With reference to FIG 1, a transmission equipped with a control device in accordance with an embodiment of the invention will be described. This transmission includes a transmission case 100, a gear shift mechanism 200, a synchromesh mechanism 300, a select actuator 400, a shift actuator 500, and an ECU 600 that is connected to the select actuator 400 and the shift actuator 500.

The gear shift mechanism 200 is made up of an input shaft 202, a counter shaft (not shown), an output shaft 204, and gear trains that are connected to these shafts and held in a constantly meshed state. The gears of the train on the output shaft 204 are individually connected thereto so that they can be idled relative to the output shaft 204.

The synchromesh mechanism 300 sets the gear shift mechanism 200 at a predetermined transmission gear ratio by switching the state of a predetermined gear of the gear trains of the gear shift mechanism 200 so as to cause the gear to rotate synchronously with the output shaft 204. Incidentally, the synchromesh mechanism 300 will be described in detail below.

The select actuator 400 selects, from the gears of the synchromesh mechanism 300, a gear that corresponds to a transmission gear ratio to be set, through a shift-operation of a select shaft. The select actuator 400 becomes unnecessary if a shift actuator 500 is provided for each shift fork. Hereinafter, a case where the shift actuator 500 provided for each of the shift forks is controlled will be described.

The shift actuator 500 moves a sleeve 310 of the synchromesh mechanism 300 (described below) in an axis direction X by the line oil pressure. The shift actuators 500 are not limited to a hydraulic type. Alternatively, electrically-operated motor may also be employed.

A stroke sensor 602, a shift position sensor 606 of a shift lever 604, an input shaft rotation speed sensor 608, and an output shaft rotation speed sensor 610 are connected to the ECU 600 via harnesses or the like.

The stroke sensor 602 detects the amount of movement of the sleeve 310 from a neutral position (the sleeve movement amount) S, and sends a detection signal to the ECU 600.

The shift position sensor 606 detects the position of the shift lever 604, and sends a detection signal to the ECU 600. In addition, the shift lever 604 is operated by a driver to a position that corresponds to a gear step the driver desires.

The input shaft rotation speed sensor 608 detects the rotation speed (input shaft rotation speed) NIN of the input shaft 202 of the gear shift mechanism 200, and sends a detection signal to the ECU 600.

The output shaft rotation speed sensor 610 detects the rotation speed (output shaft rotation speed) NOUT of the output shaft 204 of the gear shift mechanism 200, and sends a detection signal to the ECU 600.

The ECU 600 controls the select actuator 400 and the shift actuator 500 so that the gear shift mechanism 200 assumes a desired state, based on the detection signals sent from the stroke sensor 602, the shift position sensor 606, the input shaft rotation speed sensor 608, the output shaft rotation speed sensor 610, etc., as well as map and programs stored in a ROM (Read Only Memory).

With reference to FIG. 2, the synchromesh mechanism 300 will be described. The synchromesh mechanism 300 includes the sleeve 310 engaged with the shift forks (not shown), a synchronizer ring 320, and a shifting key 316.

The sleeve 310 is fitted to outer peripheral splines of a clutch hub (not shown) connected to the output shaft 204, via inner peripheral splines 312 of the sleeve 310. The sleeve 310 is moved in the axis direction X by the shift actuator 500.

The synchronizer ring 320 is formed in a cone shape. As the synchronizer ring 320 is pressurized by the sleeve 310 in the axis direction X, a cone surface 326 of the synchronizer ring 320 contacts a cone surface 336 of a gear 330 that is idling on the output shaft 204 at a rotation speed synchronous with that of the input shaft 202. Outer peripheral teeth 324 are formed on the outer periphery of the synchronizer ring 320 so as to mesh with the inner peripheral splines 312 of the sleeve 310.

The shifting key 316 is fitted to an inner peripheral surface of the sleeve 310 in centrifugal directions, and pressurizes an end surface of the synchronizer ring 320 in the axis direction X during an early period of the movement in the axis direction X (in a shift-in region described below).

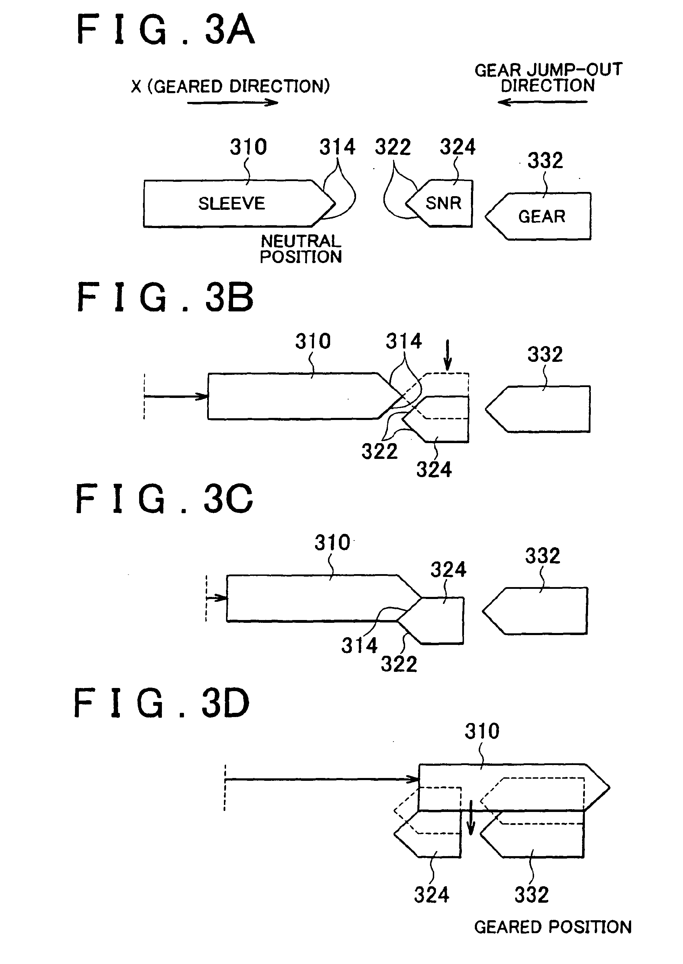

With reference to FIG. 3, actions of the synchromesh mechanism 300 will be described. During a neutral state of the gear shift mechanism 200, the sleeve 310 is held at a neutral position as shown in FIG 3A.

When the sleeve 310 starts to move in the axis direction X (hereinafter, this period will be also termed "shift-in region"), the shifting key 316 also moves in the axis direction X and pressurizes the end surface of the synchronizer ring 320 in the same axis direction.

The shifting key 316 is positioned so as to rotate at a position that is relatively near to one side of the grooves of the outer peripheral teeth 324 of the synchronizer ring 320. Therefore, as shown in FIG. 3B, the phases of chamfered surfaces 314 of the inner peripheral splines 312 and chamfered surfaces 322 of the outer peripheral teeth 324 of the synchronizer ring 320 are restricted so as to always facing each other in mutually deviated phases.

Therefore, the sleeve 310 can be further moved in the axis direction X, so that the chamfered surfaces 314 of the sleeve 310 pressurize the chamfered surfaces 322 of the synchronizer ring 320 as shown in FIG. 3C. Therefore, large friction force occurs on the cone surface 326 of the synchronizer ring 320 and the cone surface 336 of the gear 330. Furthermore, when the inner peripheral splines 312 of the sleeve 310 enters the groove spaces between the outer peripheral teeth 324 of the synchronizer ring 320 (hereinafter, this region will also be termed "synchronization region"), the sleeve 310 directly pressurizes the synchronizer ring 320 in the axis direction X so that the rotation of the gear 330 synchronizes with the rotation of the synchronizer ring 320.

After the synchronization is completed, the synchronizer ring 320 assumes an idle state, and the sleeve 310 is moved further in the axis direction X. At the time point at which an end surface of the sleeve 310 contacts a stopper 334, the inner peripheral splines 312 enter the groove spaces between external teeth 332 as shown in FIG 3D (hereinafter, this period will be termed "push-through region"), thus completing the shift (gear engagement).

If a vehicle equipped with a transmission constructed as described above receives a shock due to a sharp acceleration or deceleration, a run on a rough surface road, a run over bumps, etc., the sleeve 310 may sometimes move from the position where the sleeve 310 is in contact with the stopper 334 (the geared position) to a neutral position side (in a gear jump-out direction) and therefore the gear may jump out. During the gear jumped-out state, the transmission is in a neutral state although the driver does not intend to have such a state. Therefore, the duration of the gear jumped-out state needs to be made short.

If the sleeve 310 is moved from the gear jumped-out state directly to the geared position, the duration of the gear jumped-out state can be made short. However, abnormal gear noise can occur if the input shaft 202 and the output shaft 204 are not synchronous.

Therefore, in this embodiment, during the gear jumped-out state, it is determined whether the input shaft 202 and the output shaft 204 are synchronous. Based on the result of the determination, it is selected whether to move the sleeve 310 to the geared position after returning the sleeve 310 to the neutral position or move the sleeve 310 directly to the geared position without returning it to the neutral position.

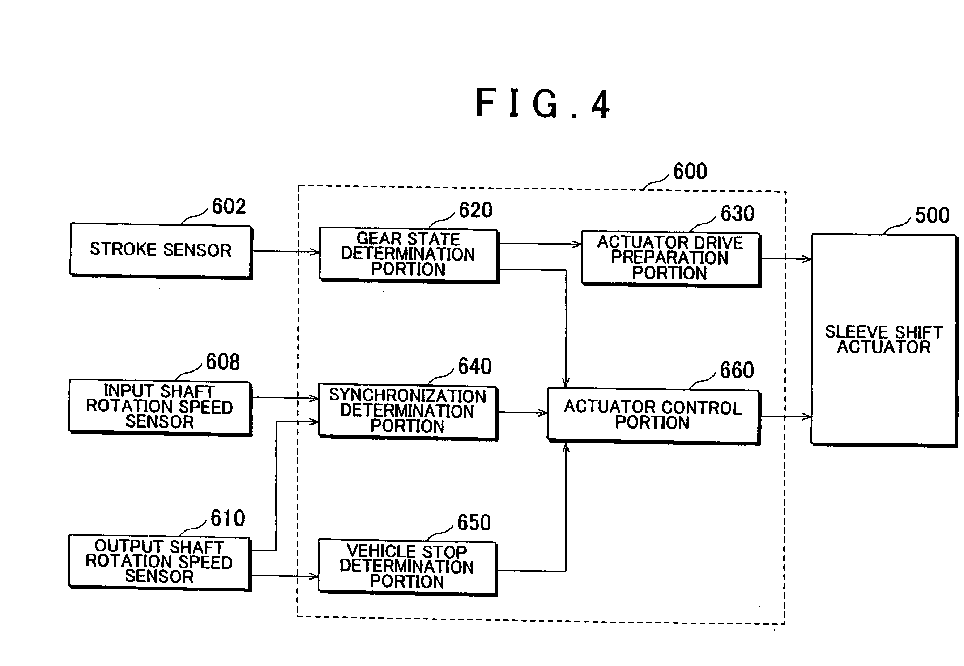

With reference to FIG. 4, a functional block diagram of the control device in accordance with this embodiment will be described. As shown in FIG 4, this control device includes a gear state determination portion 620, an actuator drive preparation portion 630, a synchronization determination portion 640, a vehicle stop determination portion 650, and an actuator control portion 660.

The gear state determination portion 620 determines the state of the gears of the gear shift mechanism 200 (i.e., whether a gear has jumped out) based on the sleeve movement amount S from the stroke sensor 602.

The actuator drive preparation portion 630 sends to the shift actuator 500 a control signal that heightens the line oil pressure of the shift actuator 500 beforehand so that a delay in the driving of the shift actuator 500 will not occur, based on the result of the determination by the gear state determination portion 620.

The synchronization determination portion 640 determines whether the input shaft 202 and the output shaft 204 are synchronous based on the input shaft rotation speed NIN from the input shaft rotation speed sensor 608 and the output shaft rotation speed NOUT from the output shaft rotation speed sensor 610.

The vehicle stop determination portion 650 determines whether the vehicle is at a stop based on the output shaft rotation speed NOUT from the output shaft rotation speed sensor 610.

The actuator control portion 660 sends a control signal to the shift actuator 500 so that the sleeve 310 of the gear shift mechanism 200 is moved to control the state of gears based on the results of determination from the gear state determination portion 620, the synchronization determination portion 640 and the vehicle stop determination portion 650.

The control device in accordance with the embodiment that has functional blocks as described above may be realized by a hardware device that is constructed mainly of digital circuits and analog circuits. Alternatively, the control device may also be realized by a software device that is made mainly of a CPU (Central Processing Unit) and a memory that are included in the ECU, and programs that are read from the memory and are executed by the CPU. Generally, it is said that the realization of the control device by a hardware device is advantageous in the operation speed, and the realization thereof by a software device is advantageous in the changing of the design. Hereinafter, the realization of the control device as a software construction will be described. Incidentally, a recording medium in which such programs are recorded is also an aspect of the invention.

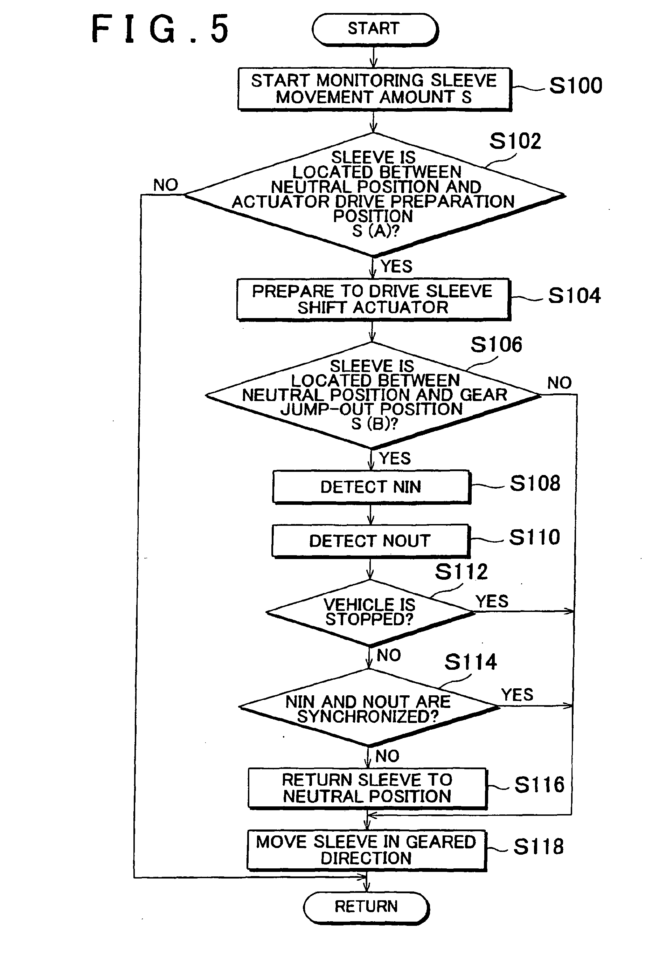

With reference to FIG 5, a control process of a program that the ECU 600 in accordance with the embodiment executes will be described. Incidentally, this program is executed repeatedly at predetermined intervals.

In step (hereinafter, abbreviated as "S") 100, the ECU 600 starts to monitor the amount S of movement of the sleeve 310 from the neutral position (sleeve movement amount) based on the signal from the stroke sensor 602.

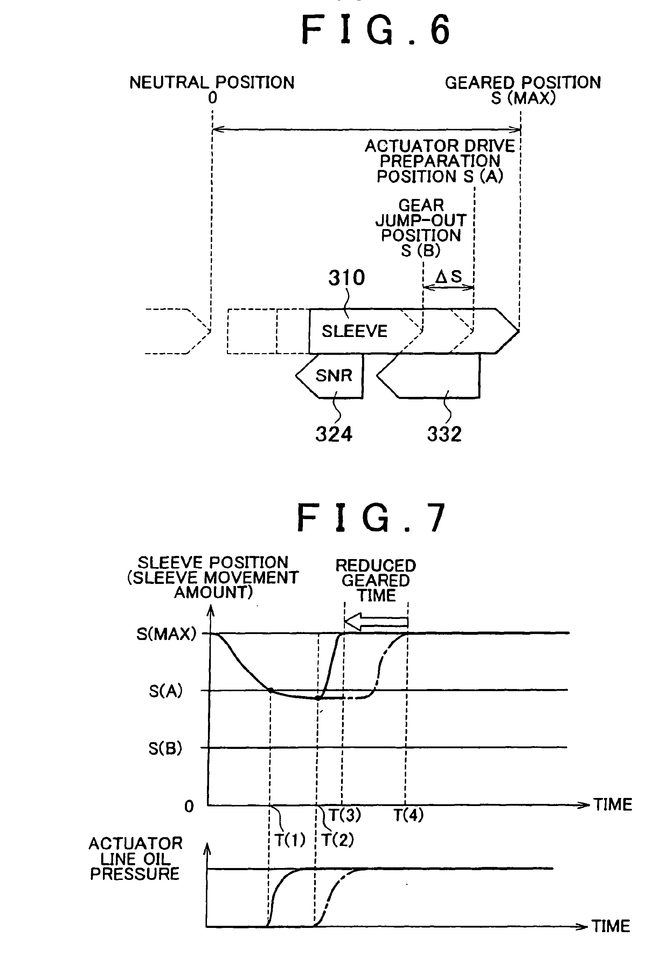

In S102, the ECU 600 determines whether the position of the sleeve 310 is to the neutral position side of an actuator drive preparation position S_{A} based on the sleeve movement amount S. The actuator drive preparation position S_{A}, as shown in FIG. 6, is set at a position that is to the neutral position side of the geared position S_{MAX} at which the sleeve 310 contacts the stopper 334, and that is a position of a predetermined value ΔS to the geared position S_{MAX} side of a gear jump-out position S_{B} at which the gear jumped-out state occurs. In addition, the gear jump-out position S_{B} is determined beforehand as a value at which the gear jumped-out state is possible, through experiments or the like, taking into consideration the variation of the mounting accuracy of the sleeve 310, the gear 330 and the stopper 334. Besides, the predetermined value ΔS is determined beforehand through experiments or the like, as a time period which elapses until the position of the sleeve 310 reaches the gear jump-out position S_{B} and during which the line pressure of the shift actuator 500 can be held sufficiently high. If the position of the sleeve 310 is to the neutral position side of the actuator drive preparation position S_{A} (YES in S102), the process proceeds to S104. Otherwise (NO in S102), this process ends.

In S104, the ECU 600 sends to the shift actuator 500 a control signal for heightening the line oil pressure of the shift actuator 500 beforehand so as to prevent a delay in the driving of the shift actuator 500.

In S106, the ECU 600 determines whether the position of the sleeve 310 is to the neutral position side of the gear jump-out position S_{B} (see FIG. 6) based on the sleeve movement amount S. If the position of the sleeve 310 is to the neutral position side of the gear jump-out position S_{B} (YES in S106), the process proceeds to S108. Otherwise (NO in S106), the process proceeds to S118.

In S108, the ECU 600 detects the input shaft rotation speed NIN based on the signal from the input shaft rotation speed sensor 608.

In S110, the ECU 600 detects the output shaft rotation speed NOUT based on the signal from the output shaft rotation speed sensor 610.

In S112, the ECU 600 determines whether the vehicle is at a stop based on the output shaft rotation speed NOUT. If the vehicle is at a stop (YES in S112), the process proceeds to S118. Otherwise (NO in S112), the process proceeds to S 114.

In S114, the ECU 600 determines whether the input shaft rotation speed NIN and the output shaft rotation speed NOUT are synchronous. The ECU 600 determines that the input shaft rotation speed NIN and the output shaft rotation speed NOUT are synchronous, for example, in the case where the input shaft rotation speed NIN is within a range that is determined beforehand from the product of the output shaft rotation speed NOUT and the transmission gear ratio. If the input shaft rotation speed NIN and the output shaft rotation speed NOUT are synchronous (YES in S114), the process proceeds to S118. Otherwise (NO in S114), the process proceeds to S116.

In S116, the ECU 600 sends to the shift actuator 500 such a control signal as to return the sleeve 310 to the neutral position.

In S118, the ECU 600 sends to the shift actuator 500 such a control signal as to move the sleeve 310 to the geared position S_{MAX}.

Actions of the vehicle controlled by the ECU 600 in accordance with the embodiment based on the foregoing flowchart will be described.

Firstly, let it assumed that, as shown in FIG. 7, the sleeve 310 moves from the geared position S_{MAX} to the neutral position side, and reaches the actuator drive preparation position S_{A} at a time T1 (YES in S102).

In this case, at the time T1, the line oil pressure of the shift actuator 500 is heightened beforehand (S104). After that, at a time T2, if it is determined that the sleeve 310 has not moved to the gear jump-out position S_{B} (NO in S106), the sleeve 310 is not returned to the neutral position, but is returned directly to the geared position S_{MAX} (S118). Thus, the sleeve 310 is moved to the geared position S_{MAX} before the gear jumped-out state occurs. Hence, occurrence of the gear jumped-out state can be prevented.

Furthermore, since the line oil pressure of the shift actuator 500 is heightened in advance at the time T1, the time of completion of the gear engagement can be advanced from a time T4 to a time T3, in comparison with the case where the line oil pressure of the shift actuator 500 is heightened at the time T2 (a dashed-dotted line in FIG. 7). Therefore, the gear re-arrangement time can be shortened.

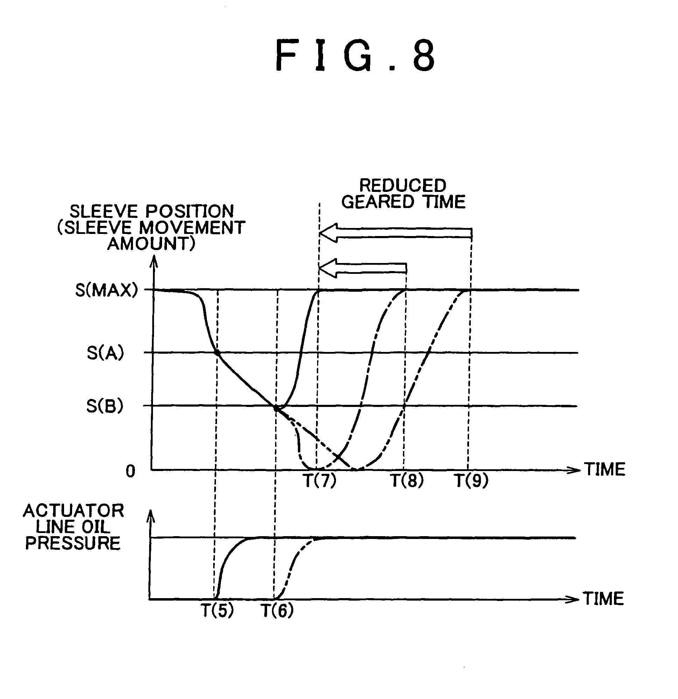

Next, let it assumed that, as shown in FIG. 8, the sleeve 310 moves from the geared position S_{MAX} to the neutral position side and the position of the sleeve 310 reaches the gear jump-out position S_{B} at a time T6.

At the time T6, in the case where the vehicle is at a stop (YES in S112), or in the case where the input shaft rotation speed NIN and the output shaft rotation speed NOUT are synchronous (YES in S114), returning the sleeve 310 directly to the geared position S_{MAX} without returning it to the neutral position does not cause occurrence of the abnormal gear noise or the like.

Therefore, the sleeve 310 is returned directly to the geared position S_{MAX} without returning it to the neutral position (S118). Therefore, the time of completion of the gear engagement can be advanced from a time T8 to a time T7, in comparison with the case where the sleeve 310 is returned to the geared position S_{MAX} after being returned to the neutral position (a dashed-dotted line in FIG 8). Therefore, unnecessary prolongation of the gear re-arrangement time is restrained, and therefore the gear re-arrangement time can be shortened.

Furthermore, at a time T5 when the sleeve 310 reaches the actuator drive preparation position S_{A}, the line oil pressure of the shift actuator 500 is heightened in advance (S104). Therefore, the time of completion of the gear engagement can be advanced from a time T9 to a time T7, in comparison with the case where the line oil pressure of the shift actuator 500 is heightened at the time T6 following the time T5 (a dashed-two dotted line in FIG. 8). Therefore, the delay of the time at which the sleeve 310 starts to move after the actuator 500 receives a movement command regarding the sleeve 310 can be restrained, and prolongation of the gear re-arrangement time can be restrained.

Thus, according to the control device in accordance with the embodiment, in the case where a gear jump-out occurs in a transmission that automatically performs the gear shifting by using a synchromesh mechanism and an actuator that controls the synchromesh mechanism, the actuator is controlled so as so to return the sleeve directly to the geared position without returning it to the neutral position if the input shaft and the output shaft of the transmission are synchronous or if the vehicle is at a stop. Therefore, the control device can shorten the gear re-arrangement time while restraining the occurrence of the abnormal gear noise at the time of engaging a gear.

While the invention has been described with reference to example embodiments thereof, it is to be understood that the invention is not limited to the described embodiments or constructions. To the contrary, the invention is defined by the appended claims and is intended to cover various modifications and equivalent arrangements. In addition, while the various elements of the example embodiments are shown in various combinations and configurations, other combinations and configurations, including more, less or only a single element, are also within the scope of the invention.

## Claims

1. A transmission control device that automatically performs a gear shift by using a synchromesh mechanism (300) and an actuator (500) that controls the synchromesh mechanism (300), the synchromesh mechanism (300) having a sleeve (310) that is connected to one of an input shaft (202) and an output shaft (204) of a transmission (200), the sleeve (310) moving from a neutral position to a geared position (S_{MAX}) and meshing with a gear (330) in synchronization, the gear (330) being rotated in synchronous with the other of the input shaft (202) and the output shaft (204), the transmission control device comprises :
movement amount detection means (602) for detecting a movement amount (S) of the sleeve (310);
determination means (620) for determining whether the sleeve (310) is jumped out of the gear (330) based on the movement amount (S) of the sleeve (310); and
actuator control means (660) for controlling the actuator (500) based on at least a synchronous state of the input shaft (202) and the output shaft (204) if it is determined that the sleeve (310) is jumped out of the gear (330), **characterised in that**
the actuator control means (660) is configured to, if it is determined that the sleeve (310) is jumped out of the gear (330), select one of a first control mode of the actuator (500) that moves the sleeve (310) to the geared position (S_{MAX}) after once returning the sleeve (310) to the neutral position and a second control mode that moves the sleeve (310) to the geared position (S_{MAX}) without returning the sleeve (310) to the neutral position, and to control the actuator (500) according to the selected control mode.

2. The transmission control device according to claim 1, wherein the determination means (620) determines that the sleeve (310) is jumped out of the gear (330) if the movement amount (S) of the sleeve (310) reaches a first predetermined value (S_{B}).

3. The transmission control device according to claim 1 or 2, wherein the actuator control means (660) selects the control mode of the actuator (500) based on a rotation speed (NIN) of the input shaft (202) and a rotation speed (NOUT) of the output shaft (204).

4. The transmission control device according to any preceding claim, wherein the actuator control means (660) selects the second control mode if the rotation speed (NIN) of the input shaft (202) and the rotation speed (NOUT) of the output shaft (204) are synchronous.

5. The transmission control device according to any of claims 1 to 3, wherein the actuator control means (660) selects the first control mode if the rotation speed (NIN) of the input shaft (202) and the rotation speed (NOUT) of the output shaft (204) are not synchronous.

6. The transmission control device according to claim 1 or 2, wherein the actuator control means (660) selects the second control mode if a vehicle equipped with the transmission (200) is in a stopped state.

7. The transmission control device according to any one of claims 2 to 6, further comprising actuator drive preparation means (630) for preparing to move the sleeve (310) to the geared position (S_{MAX}) by using the actuator (500) when the movement amount (S) of the sleeve (310) reaches a second predetermined value (S_{A}) that is between a first predetermined value (S_{B}) and the geared position (S_{MAX}).

8. The transmission control device according to claim 7, wherein:
the actuator (500) is hydraulically controlled; and
a line oil pressure of the actuator (500) is heightened when the movement amount (S) of the sleeve (310) reaches the second predetermined value (S_{A}).

9. A transmission control method that automatically performs a gear shift by using a synchromesh mechanism (300) and an actuator (500) that controls the synchromesh mechanism (300), the synchromesh mechanism (300) having a sleeve (310) that is connected to one of an input shaft (202) and an output shaft (204) of a transmission (200), the sleeve (310) moving from a neutral position to a geared position (S_{MAX}) and meshing with a gear (330) in synchronization, the gear (330) being rotated in synchronous with the other of the input shaft (202) and the output shaft (204), the transmission control method comprises the steps of:
detecting a movement amount (S) of the sleeve (310);
determining whether the sleeve (310) is jumped out of the gear (330) based on the movement amount (S) of the sleeve (310); and
controlling the actuator (500) based on at least a synchronous state of the input shaft (202) and the output shaft (204) if it is determined that the sleeve (310) is jumped out of the gear (330), **characterized in that**
the method further comprises the steps of:
if it is determined that the sleeve (310) is jumped out of the gear (330), selecting one of a first control mode of the actuator (500) that moves the sleeve (310) to the geared position (S_{MAX}) after once returning the sleeve (310) to the neutral position and a second control mode that moves the sleeve (310) to the geared position (S_{MAX}) without returning the sleeve (310) to the neutral position, and
controlling the actuator (500) according to the selected control mode.

10. The transmission control method according to claim 9, wherein it is determined that the sleeve (310) is jumped out of the gear (330) if the movement amount (S) of the sleeve (310) reaches a first predetermined value (S_{B}).

11. The transmission control method according to claim 9 or 10, wherein selecting the control mode based on a rotation speed (NIN) of the input shaft (202) and a rotation speed (NOUT) of the output shaft (204).

12. The transmission control method according to any of claims 9 to 11, wherein selecting the second control mode if the rotation speed (NIN) of the input shaft (202) and the rotation speed (NOUT) of the output shaft (204) are synchronous.

13. The transmission control method according to any of claims 9 to 11, wherein selecting the first control mode if the rotation speed (NIN) of the input shaft (202) and the rotation speed (NOUT) of the output shaft (204) are not synchronous.

14. The transmission control method according to claim 9, wherein selecting the second control mode if a vehicle equipped with the transmission (200) is in a stopped state.

15. The transmission control method according to any one of claims 10 to 14, further comprising preparing to move the sleeve (310) to the geared position (S_{MAX}) by using the actuator (500) when the movement amount (S) of the sleeve (310) reaches a second predetermined value (S_{A}) that is between a first predetermined value (S_{B}) and the geared position (S_{MAX})

16. The transmission control method according to claim 15, further comprising heightening a line oil pressure of the actuator (500) that is hydraulically controlled when the movement amount (S) of the sleeve (310) reaches the second predetermined value (S_{A}).

## Patentansprüche

1. Getriebesteuervorrichtung, die unter Verwendung eines Synchrongetriebemechanismus (300) und eines Stellglieds (500), das den Synchrongetriebemechanismus (300) steuert, einen automatischen Gangwechsel durchführt, wobei der Synchrongetriebemechanismus (300) eine Hülse (310) aufweist, die mit einer Eingangswelle (202) oder einer Ausgangswelle (204) eines Getriebes (200) verbunden ist, wobei die Hülse (310) sich aus einer Neutralstellung in eine Eingriffsstellung (S_{MAX}) bewegt und synchron mit einem Zahnrad (330) kämmt, wobei das Zahnrad (330) sich synchron mit der jeweils anderen, Eingangswelle (202) oder Ausgangswelle (204) dreht, wobei die Getriebesteuervorrichtung aufweist:
eine Verstellweg-Erfassungsmittel (602) zum Erfassen des Weges (S), über den sich die Hülse (310) bewegt;
ein Bestimmungsmittel (620) zum Bestimmen, ob die Hülse (310) aus dem Zahnrad (330) gesprungen ist, auf Basis des Weges (S), über den sich die Hülse (310) bewegt; und
ein Stellglied-Steuermittel (660) zum Steuern des Stellmittels (500) zumindest auf Basis eines Synchronzustands der Eingangswelle (202) und der Ausgangswelle (204), falls bestimmt wird, dass die Hülse (310) aus dem Zahnrad (330) gesprungen ist,
**dadurch gekennzeichnet, dass**
das Stellglied-Steuermittel (660) so ausgelegt ist, dass es entweder einen ersten Steuermodus, mit dem die Hülse (310) erst dann in die Eingriffsstellung (S_{MAX}) bewegt wird, nachdem die Hülse (310) in die Neutralstellung zurückgebracht wurde, oder einen zweiten Steuermodus, mit dem die Hülse (310) in die Eingriffsstellung (S_{MAX}) bewegt wird, ohne dass die Hülse (310) vorher in die Neutralstellung zurückgebracht wurde, für das Stellglied (500) auswählt, wenn bestimmt wird,
dass die Hülse (310) aus dem Zahnrad (330) gesprungen ist, und das Stellglied (500) gemäß dem ausgewählten Steuermodus steuert.

2. Getriebesteuervorrichtung nach Anspruch 1, wobei das Bestimmungsmittel bestimmt, dass die Hülse (310) aus dem Zahnrad (330) gesprungen ist, wenn der Weg (S), über den sich die Hülse (310) bewegt, einen ersten vorgegebenen Wert (S_{B}) erreicht.

3. Getriebesteuervorrichtung nach Anspruch 1 oder 2, wobei das Stellglied-Steuermittel (660) den Steuermodus für das Stellglied (500) auf Basis einer Drehzahl (NIN) der Eingangswelle (202) und eine Drehzahl (NOUT) der Ausgangswelle (204) auswählt.

4. Getriebesteuervorrichtung nach einem der vorangehenden Ansprüche, wobei das Stellglied-Steuermittel (660) den zweiten Steuermodus auswählt, wenn die Drehzahl (NIN) der Eingangswelle (202) und die Drehzahl (NOUT) der Ausgangswelle (204) synchron sind.

5. Getriebesteuervorrichtung nach Anspruch 1 oder 2, wobei das Stellglied-Steuermittel (660) den ersten Steuermodus auswählt, wenn die Drehzahl (NIN) der Eingangswelle (202) und die Drehzahl (NOUT) der Ausgangswelle (204) nicht synchron sind.

6. Getriebesteuervorrichtung nach Anspruch 1 oder 2, wobei das Stellglied-Steuermittel (660) den zweiten Steuermodus auswählt, wenn das Fahrzeug, das mit dem Getriebe (200) ausgestattet ist, angehalten wurde.

7. Getriebesteuervorrichtung nach einem der Ansprüche 2 bis 6, ferner ein Stellgliedantriebs-Vorbereitungsmittel (630) aufweisend zum Vorbereiten einer Bewegung der Hülse (310) in die Eingriffsstellung (S_{MAX}) unter Verwendung des Stellglieds (500), wenn der Weg, über den sich die Hülse (310) bewegt, einen zweiten vorgegebenen Wert (S_{A}) erreicht, der zwischen einem ersten vorgegebenen Wert (S_{B}) und der Eingriffsstellung (S_{MAX}) liegt.

8. Getriebesteuervorrichtung nach Anspruch 7, wobei:
das Stellglied (500) hydraulisch gesteuert wird; und
der Ölleitungsdruck des Stellglieds (500) erhöht wird, wenn der Weg (S), über den sich die Hülse (310) bewegt, den zweiten vorgegebenen Wert (S_{A}) erreicht.

9. Getriebesteuerverfahren, das unter Verwendung eines Synchrongetriebemechanismus (300) und eines Stellglieds (500), das den Synchrongetriebemechanismus (300) steuert, einen automatischen Gangwechsel durchführt, wobei der Synchrongetriebemechanismus (300) eine Hülse (310) aufweist, die mit einer Eingangswelle (202) oder einer Ausgangswelle (204) eines Getriebes (200) verbunden ist, wobei die Hülse (310) sich aus einer Neutralstellung in eine Eingriffsstellung (S_{MAX}) bewegt und synchron mit einem Zahnrad (330) kämmt, wobei das Zahnrad (330) sich synchron mit der jeweils anderen, Eingangswelle (202) oder Ausgangswelle (204) dreht, wobei das Getriebesteuerverfahren die folgenden Schritte aufweist:
Erfassen eines Weges (S), über den sich die Hülse (310) bewegt;
Bestimmen, ob die Hülse (310) aus dem Zahnrad (330) gesprungen ist, auf Basis des Weges (S), über den sich die Hülse (310) bewegt; und
Steuern des Stellmittels (500) zumindest auf Basis eines Synchronzustands der Eingangswelle (202) und der Ausgangswelle (204), falls bestimmt wird, dass die Hülse (310) aus dem Zahnrad (330) gesprungen ist,
**dadurch gekennzeichnet, dass**
das Verfahren ferner die folgenden Schritte aufweist:
Auswählen entweder eines ersten Steuermodus, mit dem die Hülse (310) erst dann in die Eingriffsstellung (S_{MAX}) bewegt wird, nachdem die Hülse (310) in die Neutralstellung zurückgebracht wurde, oder eines zweiten Steuermodus, mit dem die Hülse (310) in die Eingriffsstellung (S_{MAX}) bewegt wird, ohne dass die Hülse (310) vorher in die Neutralstellung zurückgebracht wurde, für das Stellglied (500), wenn bestimmt wird, dass die Hülse (310) aus dem Zahnrad (330) gesprungen ist,
und
Steuern des Stellglieds (500) gemäß dem ausgewählten Steuermodus.

10. Getriebesteuerverfahren nach Anspruch 9, wobei bestimmt wird, dass die Hülse (310) aus dem Zahnrad (330) gesprungen ist, wenn der Weg (S), über den sich die Hülse (310) bewegt, einen ersten vorgegebenen Wert (S_{B}) erreicht.

11. Getriebesteuerverfahren nach Anspruch 9 oder 10, wobei die Auswahl des Steuermodus für das Stellglied (500) auf Basis einer Drehzahl (NIN) der Eingangswelle (202) und einer Drehzahl (NOUT) der Ausgangswelle (204) durchgeführt wird.

12. Getriebesteuerverfahren nach einem der Ansprüche 9 bis 11, wobei der zweite Steuermodus ausgewählt wird, wenn die Drehzahl (NIN) der Eingangswelle (202) und die Drehzahl (NOUT) der Ausgangswelle (204) synchron sind.

13. Getriebesteuerverfahren nach einem der Ansprüche 9 bis 11, wobei der erste Steuermodus ausgewählt wird, wenn die Drehzahl (NIN) der Eingangswelle (202) und die Drehzahl (NOUT) der Ausgangswelle (204) nicht synchron sind.

14. Getriebesteuerverfahren nach Anspruch 9, wobei der zweite Steuermodus ausgewählt wird, wenn das Fahrzeug, das mit dem Getriebe (200) ausgestattet ist, angehalten wurde.

15. Getriebesteuerverfahren nach einem der Ansprüche 10 bis 14, ferner ein Vorbereiten einer Bewegung der Hülse (310) in die Eingriffsstellung (S_{MAX}) unter Verwendung des Stellglieds (500) beinhaltend, wenn der Weg, über den sich die Hülse (310) bewegt, einen zweiten vorgegebenen Wert (S_{A}) erreicht, der zwischen einem ersten vorgegebenen Wert (S_{B}) und der Eingriffsstellung (S_{MAX}) liegt.

16. Getriebesteuerverfahren nach Anspruch 15, ferner eine Erhöhung eines Ölleitungsdruck des Stellglieds (500) beinhaltend, wenn der Weg (S), über den sich die Hülse (310) bewegt, den zweiten vorgegebenen Wert (S_{A}) erreicht.

## Revendications

1. Dispositif de commande de transmission qui réalise automatiquement un changement de rapport en utilisant un mécanisme synchroniseur (300) et un actionneur (500) qui commande le mécanisme synchroniseur (300), le mécanisme synchroniseur (300) possédant un manchon (310) qui est relié à un parmi un arbre d'entrée (202) et un arbre de sortie (204) d'une transmission (200), le manchon (310) se déplaçant d'une position neutre à une position en rapport (S_{MAx}) et s'engrenant avec un élément denté (330) en synchronisation, l'élément denté (330) étant tourné de façon synchrone avec l'autre parmi l'arbre d'entrée (202) et l'arbre de sortie (204), le dispositif de commande de transmission comprenant :
des moyens de détection de quantité de mouvement (602) pour détecter une quantité de mouvement (S) du manchon (310) ;
des moyens de détermination (620) pour déterminer si le manchon (310) est séparé de l'élément denté (330) en fonction de la quantité de mouvement (S) du manchon (310) ; et
des moyens de commande d'actionneur (660) pour commander l'actionneur (500) en fonction d'au moins un état synchrone de l'arbre d'entrée (202) et de l'arbre de sortie (204) s'il est déterminé que le manchon (310) est séparé de l'élément denté (330),
**caractérisé en ce que**
le moyen de commande d'actionneur (660) est configuré pour, s'il est déterminé que le manchon (310) est séparé de l'élément denté (330), sélectionner un parmi un premier mode de commande de l'actionneur (500), qui déplace le manchon (310) jusqu'à la position en rapport (S) après avoir remis une fois le manchon (310) dans la position neutre, et un second mode de commande, qui déplace le manchon (310) jusqu'à la position en rapport (S_{MAX}) sans remettre le manchon (310) dans la position neutre, et pour commander l'actionneur (500) selon le mode de commande sélectionné.

2. Dispositif de commande de transmission selon la revendication 1, dans lequel les moyens de détermination (620) déterminent que le manchon (310) est séparé de l'élément denté (330) si la quantité de mouvement (S) du manchon (310) atteint une première valeur prédéterminée (S_{B}).

3. Dispositif de commande de transmission selon la revendication 1 ou 2, dans lequel le moyen de commande d'actionneur (660) sélectionne le mode de commande de l'actionneur (500) en fonction d'une vitesse de rotation (NIN) de l'arbre d'entrée (202) et d'une vitesse de rotation (NOUT) de l'arbre de sortie (204).

4. Dispositif de commande de transmission selon une quelconque revendication précédente, dans lequel le moyen de commande d'actionneur (660) sélectionne le second mode de commande si la vitesse de rotation (NIN) de l'arbre d'entrée (202) et la vitesse de rotation (NOUT) de l'arbre de sortie (204) sont synchrones.

5. Dispositif de commande de transmission selon une quelconque des revendications 1 à 3, dans lequel le moyen de commande d'actionneur (660) sélectionne le premier mode de commande si la vitesse de rotation (NIN) de l'arbre d'entrée (202) et la vitesse de rotation (NOUT) de l'arbre de sortie (204) ne sont pas synchrones.

6. Dispositif de commande de transmission selon la revendication 1 ou 2, dans lequel le moyen de commande d'actionneur (660) sélectionne le second mode de commande si un véhicule équipé de la transmission (200) est dans un état arrêté.

7. Dispositif de commande de transmission selon une quelconque des revendications 2 à 6, comprenant en outre des moyens de préparation d'entraînement d'actionneur (630) pour préparer le déplacement du manchon (310) jusqu'à la position en rapport (S_{MAX}) en utilisant l'actionneur (500) lorsque la quantité de mouvement (S) du manchon (310) atteint une seconde valeur prédéterminée (S_{A}) qui est entre une première valeur prédéterminée (S_{B}) et la position en rapport (S_{MAX}).

8. Dispositif de commande de transmission selon la revendication 7, dans lequel :
l'actionneur (500) est commandé hydrauliquement ; et
une pression d'huile de conduite de l'actionneur (500) est augmentée lorsque la quantité de mouvement (S) du manchon (310) atteint la seconde valeur prédéterminée (S_{A}).

9. Procédé de commande de transmission qui réalise automatiquement un changement de rapport en utilisant un mécanisme synchroniseur (300) et un actionneur (500) qui commande le mécanisme synchroniseur (300), le mécanisme synchroniseur (300) possédant un manchon (310) qui est relié à un parmi un arbre d'entrée (202) et un arbre de sortie (204) d'une transmission (200), le manchon (310) se déplaçant d'une position neutre à une position en rapport (S_{MAX}) et s'engrenant avec un élément denté (330) en synchronisation, l'élément denté (330) étant tourné de façon synchrone avec l'autre parmi l'arbre d'entrée (202) et l'arbre de sortie (204), le procédé de commande de transmission comprenant les étapes consistant à :
détecter une quantité de mouvement (S) du manchon (310) ;
déterminer si le manchon (310) est séparé du élément denté (330) en fonction de la quantité de mouvement (S) du manchon (310) ; et
commander l'actionneur (500) en fonction d'au moins un état synchrone de l'arbre d'entrée (202) et de l'arbre de sortie (204) s'il est déterminé que le manchon (310) est séparé de l'élément denté (330),
**caractérisé en ce que** le procédé comprend en outre les étapes consistant à :
s'il est déterminé que le manchon (310) est séparé de l'élément denté (330),
sélectionner un parmi un premier mode de commande de l'actionneur (500), qui déplace le manchon (310) jusqu'à la position en rapport (S_{MAX}) après avoir remis une fois le manchon (310) dans la position neutre, et un second mode de commande, qui déplace le manchon (310) jusqu'à la position en rapport (S_{MAX}) sans remettre le manchon (310) dans la position neutre, et
commander l'actionneur (500) selon le mode de commande sélectionné.

10. Procédé de commande de transmission selon la revendication 9, dans lequel il est déterminé que le manchon (310) est séparé de l'élément denté (330) si la quantité de mouvement (S) du manchon (310) atteint une première valeur prédéterminée (S_{B}).

11. Procédé de commande de transmission selon la revendication 9 ou 10, dans lequel la sélection du mode de commande est en fonction d'une vitesse de rotation (NIN) de l'arbre d'entrée (202) et d'une vitesse de rotation (NOUT) de l'arbre de sortie (204).

12. Procédé de commande de transmission selon une quelconque des revendications 9 à 11, dans lequel le second mode de commande est sélectionné si la vitesse de rotation (NIN) de l'arbre d'entrée (202) et la vitesse de rotation (NOUT) de l'arbre de sortie (204) sont synchrones.

13. Procédé de commande de transmission selon une quelconque des revendications 9 à 11, dans lequel le premier mode de commande est sélectionné si la vitesse de rotation (NIN) de l'arbre d'entrée (202) et la vitesse de rotation (NOUT) de l'arbre de sortie (204) ne sont pas synchrones.

14. Procédé de commande de transmission selon la revendication 9, dans lequel le second mode de commande est sélectionné si un véhicule équipé de la transmission (200) est dans un état arrêté.

15. Procédé de commande de transmission selon une quelconque des revendications 10 à 14, comprenant en outre l'étape consistant à préparer le mouvement du manchon (310) jusqu'à la position en rapport (S_{MAX}) en utilisant l'actionneur (500) lorsque la quantité de mouvement (S) du manchon (310) atteint une seconde valeur prédéterminée (S_{A}) qui est entre une première valeur prédéterminée (S_{B}) et la position en rapport (S).

16. Procédé de commande de transmission selon la revendication 15, comprenant en outre l'étape consistant à augmenter une pression d'huile de conduite de l'actionneur (500) qui est commandé hydrauliquement lorsque la quantité de mouvement (S) du manchon (310) atteint la seconde valeur prédéterminée (S_{A}).
